# EUROPÄISCHE PATENTSCHRIFT

(11) **EP 0 389 805 B1**
(45) Veröffentlichungstag und Bekanntmachung des Hinweises auf die Patenterteilung: **10.11.1993**
(21) Anmeldenummer: 90103606.1
(22) Anmeldetag: 24.02.1990
(51) Int. Cl.: H02B 1/015, H02B 15/00

(54) **Pultsteuertafel, insbesondere für Maschinensteuerungen**
Control panel console, especially for control systems for machines
Pupitre de commande, en particulier pour des commandes de machines

(30) Priorität: 29.03.1989 DE 3910128
(43) Veröffentlichungstag der Anmeldung: 03.10.1990
(73) Patentinhaber: Rose-Elektrotechnik GmbH + Co KG Elektrotechnische Fabrik, D-32457 Porta Westfalica (DE)
(72) Erfinder: Pohlmann, Franz F., D-4950 Minden (DE); Hofmeister, Peter, Prof., D-8000 München 70 (DE)
(74) Vertreter: Hanewinkel, Lorenz, Dipl.-Phys.

(56) Entgegenhaltungen:
- DE-U- 8 510 274
- DE-U- 8 801 425
- US-A- 4 585 202

## Beschreibung

Die Erfindung bezieht sich auf eine Pultsteuertafel, insbesondere für Maschinensteuerungen, mit zwei mittels Querverbindungen im Abstand zueinander gehaltenen Seitenteilen.

Durch verschieden große Steuerungen weisen die auf dem Markt befindlichen Pultsteuertafeln verschiedene Gehäusegrößen auf, so daß jedes Gehäuse einen eigenen Grundkörper für die Aufnahme des Bildschirmes und der Tastatur und für die Befestigung des Gehäuses selbst haben muß.

Aus dem DE-U-8801425 ist ein Pult zur Aufnahme von Bedien- und/oder Informationsgeräten bekannt geworden, welches aus zwei Seitenteilen und diese im Abstand zueinander haltenden Querverbindungen besteht.

Durch den Einsatz verschieden langer Querverbindungen lassen sich verschiedene Pultbreiten erreichen, wobei jedoch jedes Pult individuell für die gewünschte Breite ausgelegt werden muß.

Aufgabe der Erfindung ist es, eine Pultsteuertafel nach der eingangs genannten Art dahingehend zu verbessern, daß sie aufgrund einer besonderen konstruktiven Gestaltung den wahlweisen Einbau unterschiedlich großer Gehäuse mit gebräuchlichen Steuerungen ermöglicht, so daß mit einem Grundteil die häufigsten Gehäusegrößen zu der Pultsteuertafel zusammengesetzt werden können.

Diese Aufgabe wird erfindungsgemäß durch die kennzeichnenden Merkmale des Patentanspruches 1 gelöst, wobei noch die in den einzelnen Unteransprüchen aufgeführten Gestaltungsmerkmale vorteilhafte Weiterbildungen der Aufgabenlösung darstellen.

Der erfindungsgemäße Pultsteuertafel weist in vorteilhafter Weise zwei Y-förmige Seitenteile mit unterschiedlich langen Y-Schenkein auf und diese Seitenteile bilden Anlage- und Befestigungsflächen für ein ein Steuergerät bzw. eine Steuertafel aufnehmendes Gehäuse.

Aufgrund der Y-Grundform und unterschiedlichen langen Y-Schenkein lassen sich an diesen drei Seiten der Seitenteile die gebräuchlichsten, auf dem Markt befindlichen Gehäuse für Steuerungen festlegen, so daß mit einem Grundtyp an Seitenteilen mehrere Gehäusegrößen wahlweise befestigt werden können und somit für verschiedene Gehäuse nur eine Grundausführung erforderlich ist, was sich kostengünstig und somit wirtschaftlich auswirkt.

Die Befestigung der Gehäuse ist einfach ausgeführt und weiterhin sind an diesen Y-Seitenteilen der Blendrahmen für den Bildschirm und die Frontplatte für die Tastatur ebenfalls leicht und gut einsehbar festzulegen.

Auf den Zeichnungen ist ein Ausführungsbeispiel der Erfindung dargestellt, welches nachfolgend näher erläutert wird. Es zeigt:

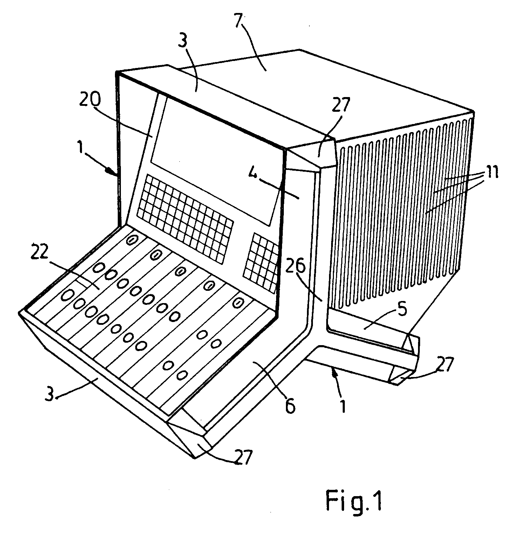

- Fig. 1: eine perspektivische Darstellung einer Pultsteuertafel,

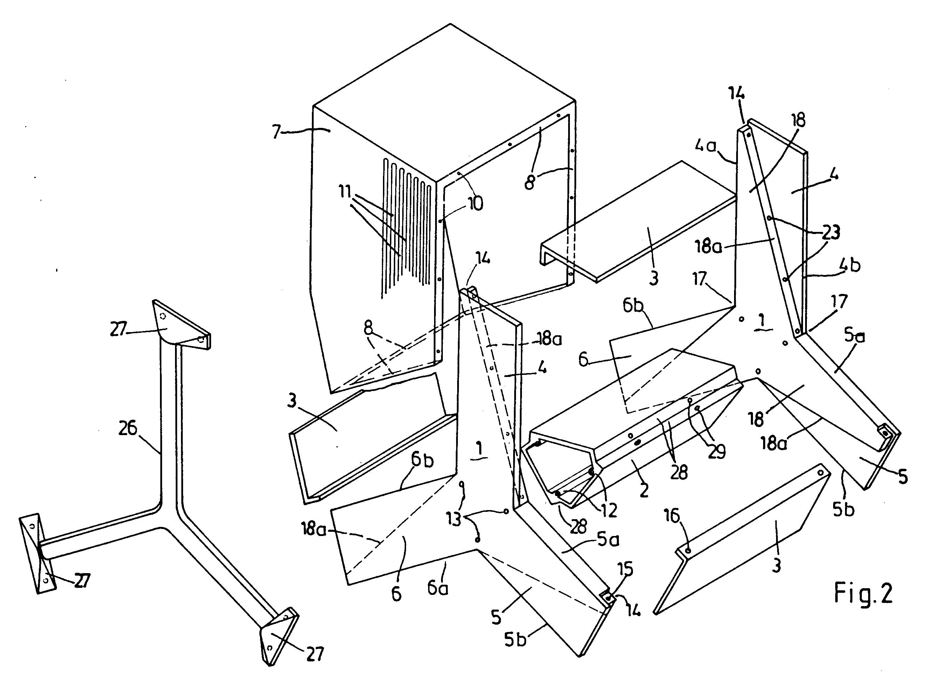

- Fig. 2: eine perspektivische Explosionsdarstellung der aus zwei Y-Seitenteilen, Querverbindungen, einem Gehäuse und Handgriffen gebildeten Pultsteuertafel,

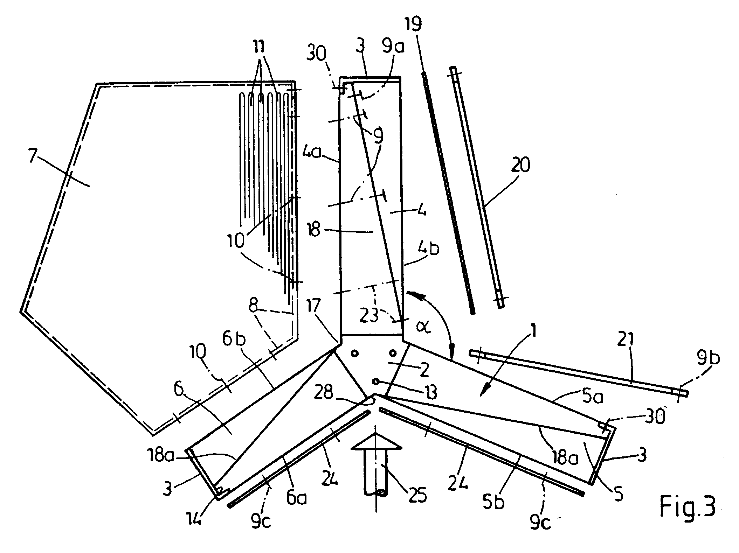

- Fig. 3: eine Seitenansicht derselben Pultsteuertafel im auseinandergenommenen Zustand.

Die Pultsteuertafel, insbesondere für Maschinensteuerungen, weist zwei mittels Querverbindungen (2, 3) im Abstand zueinander gehaltene, jeweils eine Y-Grundform mit drei unterschiedlich langen Y-Schenkeln (4, 5, 6) aufweisende Seitenteile (1) auf.

Die benachbarten Y-Schenkel (4 und 5 / 5 und 6 / 6 und 4) beider Seitenteile (1) ergeben jeweils zwei Anlage- und Befestigungsflächen (4a,6b / 6a,5b / 5a,4b) für die wahlweise Festlegung von drei unterschiedlich großen, ein Steuergerät bzw. eine Steuertafel aufnehmenden Gehäuse (7).

Die drei unterschiedlich langen Y-Schenkel (4, 5, 6) jedes Seitenteiles (1) erstrecken sich in einer Ebene und stehen unter gleich großen Winkeln zueinander, und zwar einem Winkel α von 120°.

Das Gehäuse (7) ist an seiner offenen Seite (Frontseite und Bodenseite) mit nach innen gekanteten Anlagerändern (8) ausgestattet, mit denen es an den beiden Anlage- und Befestigungsflächen (4a, 6b bzw. 6a, 5b bzw. 5a, 4b) anliegt und durch Schrauben (9) befestigt ist; diese Schrauben (9) greifen in Löcher (10) der umlaufenden Anlageränder (8) ein.

Das Gehäuse (7) kann also in drei verschiedenen Größen an den Seitenteilen (1) festgelegt werden, wobei die offene Gehäuseseite den Winkel einschließt, den auch die beiden dem Gehäuse (7) eine Anlage gebenden Befestigungsflächen (4a, 6b, bzw. 6a, 5b, bzw. 5a, 4b) einnehmen.

Das Gehäuse (7) ist aus dünnwandigem, mindestens in einzelnen Wandungen durch Sicken (11) verstärktem Blech gebildet. Dabei ist es vorteilhaft, diese Sicken (11) in die Gehäuse-Seitenwandungen einzubringen.

Als Querverbindung ist im Knotenbereich der Y-Schenkel (4, 5, 6) ein im Querschnitt dreieckartiges, hohles Verbindungsprofil (2) vorgesehen, welches innenseitig eingeformte Schraubaufnahmen (12) zeigt, in die durch Löcher (13) der Seitenteile (1) greifende Schrauben einfassen.

Weiterhin sind als Querverbindungen drei Winkelbleche (3) vorgesehen, die das freie Längenende jedes Y-Schenkels (4, 5, 6) übergreifen und dabei bündig zu den Schenkelaußenflächen liegen und durch Schrauben (30) mit den Seitenteilen (1) verbunden sind.

Für das bündige Einsetzen der Winkelbleche (3) zwischen die Seitenteile (1) ist jeder Y-Schenkel (4, 5, 6) an seiner freien Stirnseite und an der Anlage- und Befestigungsfläche (4a, 5a, 6a) mit einer eckseitigen Aussparung (14) ausgestattet, wobei in dieser Aussparung (14) ein Befestigungsloch (15) für Befestigungsschrauben (30) ausgespart ist, die durch Löcher (16) der Winkelbleche (3) in deren kürzeren Winkelschenkel fassen.

Jeder Y-Schenkel (4, 5, 6) ist innenseitig mit einem vom Winkelscheitelpunkt (17) aus diagonal nach außen zu der eckseitigen Aussparung (14) verlaufenden Absatz (18) ausgestattet und jeder dieser drei Absätze (18) bildet eine Anlage- und Befestigungsfläche (18a) für die Befestigung einer Dichtung (19) und eines Bildschirm-Blendrahmens (20) an einem Y-Schenkel (4 oder 5 oder 6) und für die Befestigung einer Frontplatte (21) einer Tastatur (22) an dem sich an dem Bildschirm-Blendrahmen (20) anschließenden Y-Schenkel (5 oder 6 oder 4). Für die Befestigung des Gehäuses (7) an seinen Anlageflächen (4a,6b / 6a,5b / 5a,4b) und für die Befestigung des Bildschirm-Blendrahmens (20) sowie der Frontplatte (21) sind in den Absätzen (18) Schraubaufnahmen (23) ausgespart, die von der schrägen Befestigungsfläche (18a) aus in Seitenteilebene in den Absatz (18) hinein- bzw. durch den Absatz (18) hindurchgeführt sind und in die die Schrauben (9, 9a) ein- und durchgreifen.

Das Verbindungsprofil (2) ist in seinen Dreieckkanten mit in Profillängsrichtung verlaufenden, winkelförmigen Abstufungen (28) ausgestattet, in denen Schraubaufnahmen (29) für die Befestigung des Bildschirm-Blendrahmens (20) und der Frontplatte (21) durch Schrauben (9a, 9b) vorgesehen sind.

Der Bildschirm-Blendrahmen (20) wird immer an der Befestigungsfläche (18a) durch Schrauben (9a) befestigt, die der frontseitigen Befestigungsfläche (4a bzw. 6a bzw. 5a) für das Gehäuse (7) gegenüberliegt, so daß der Bildschirm-Blendrahmen (20) schräg nach oben und nach hinten zwischen den Seitenteilen (1) liegt. An diesen Bildschirm-Blendrahmen (20) schließt sich dann nach vorn hin die Tastaturen-Frontplatte (21) an, die mit dem Blendrahmen (20) den Winkel α einschließt, somit schräg nach oben und hinten sich erstreckt und auf den Anlageflächen (5a, 6a oder 4a, 28) durch Schrauben (9b) befestigt wird. Jeweils unter die beiden untenliegenden Anlage- und Befestigungsflächen (6a,5a / 4a,6b oder 5a,4b) wird jeweils ein Bodenblech (24) durch Schrauben (9c) befestigt.

Weiterhin läßt sich unter dem Verbindungsprofil (2) ein Tragarm (25) für die aufgehängte Anordnung der Pultsteuertafel durch Schrauben und unter Zwischenschaltung einer Drehkupplung festlegen.

An den Außenseiten der beiden Seitenteile (1) wird jeweils ein Handgriff (26) in Y-Form angebracht, dessen drei Y-Schenkel an ihrem freien Ende jeweils einen Befestigungskopf (27) aufweisen, mit dem der Handgriff (26) durch Schrauben in den Längenendbereichen der drei Y-Schenkel (4, 5, 6) befestigt wird. Die drei Y-Schenkel des Handgriffes (26) haben in bevorzugter Weise einen ovalen Querschnitt.

Die beiden Seitenteile (1), die Querverbindungen (2, 3), die Bodenbleche (24) und die Handgriffe (26) sind in bevorzugter Weise aus Aluminium hergestellt. Es besteht jedoch auch die Möglichkeit, einzelner dieser Einzelteile aus Kunststoff zu fertigen.

Weiterhin ist es erfindungsgemäß möglich und auch vorgesehen, für die Gehäusebefestigung eine Anlagefläche (4a, oder 6a oder 5a) eines Y-Schenkels (4, 5, 6) und die Anlagefläche (18a) des benachbarten Y-Schenkels (6, 5, 4) zu benutzen, so daß das Gehäuse (7) mit seiner geöffneten Front- und Bodenseite jeweils an zwei Anlageflächen (4a, 18a bzw. 5a, 18a, bzw. 6a, 18a) anliegt und teilweise zwischen den Seitenteilen (1) liegt. Hierbei ist die Front-und Bodenseite des Gehäuses (7) im Winkel entsprechend dem Winkel der zueinander stehenden Anlageflächen (4a, 18a/5a, 18a, 6a, 18a) ausgeführt.

## Patentansprüche

1. Pultsteuertafel, insbesondere für Maschinensteuerungen, mit zwei mittels Querverbindungen im Abstand zueinander gehaltenen Seitenteilen, dadurch gekennzeichnet, daß die beiden Seitenteile (1) jeweils eine Y-Grundform mit drei unterschiedlich langen Y-Schenkeln (4,5,6) aufweisen, von denen benachbarte Y-Schenkel (4 und 5 / 5 und 6/ 6 und 4) jeweils zwei Anlage- und Befestigungsflächen (4a,6b/6a,5b/5a,4b) für die wahlweise Festlegung von drei unterschiedlich großen, ein Steuergerät bzw. eine Steuertafel aufnehmenden Gehäusen (7) bilden.

2. Pultsteuertafel nach Anspruch 1, dadurch gekennzeichnet, daß die drei unterschiedlich langen Y-Schenkel (4,5,6) jedes Seitenteiles (1) sich in einer gemeinsamen Ebene erstrecken und unter gleich großen Winkeln zueinander, und zwar einem Winkel α von 120°, stehen.

3. Pultsteuertafel nach Anspruch 1 oder 2, dadurch gekennzeichnet, daß das Gehäuse (7) an seiner offenen, den benachbarten Y-Schenkeln (4,5 bzw. 5/6) bzw. 6/4) in der Winkelstellung entsprechenden Front- und Bodenseite mit nach innen gekanteten Anlagerändern (8) ausgestattet ist, mit denen das Gehäuse (7) an den beiden der Gehäusegröße entsprechenden Anlage- und Befestigungsflächen (4a,6b / bzw. 6a, 5b bzw. 6a, 4b) anliegt und durch Schrauben befestigt ist.

4. Pultsteuertafel nach eine der Ansprüche 1 bis 3, dadurch gekennzeichnet, daß das Gehäuse (7) aus dünnwandigem, mindestens in einzelnen Wandungen, vorzugsweise in den Seitenwandungen, eingeformten Sicken (11) aus gesteiftem Blech besteht.

5. Pultsteuertafel nach einem der Ansprüche 1 bis 4, dadurch gekennzeichnet, daß als Querverbindung im Knotenbereich der Y-Schenkel (4,5,6) ein im Querschnitt dreieckartiges, hohles Verbindungsprofil (2) durch Schrauben zwischen den beiden Seitenteilen (1) festgelegt ist, wobei die Schrauben durch Löcher (13) der Seitenteile (1) fassen und in im Verbindungsprofil (2) eingeformte Schraubaufnahmen (12) eingreifen.

6. Pultsteuertafel nach einem der Ansprüche 1 bis 5, dadurch gekennzeichnet, daß als Querverbindungen Winkelbleche (3) vorgesehen sind, die das freie Längenende jedes Y-Schenkels (4,5,6) bündig zu den Schenkel-Außenflächen liegend übergreifen und durch Schrauben an den Seitenteilen (1) gehalten sind.

7. Pultsteuertafel nach einem der Ansprüche 1 bis 6, dadurch gekennzeichnet, daß jeder Y-Schenkel (4,5,6) im Eckbereich seiner Anlage- und Befestigungsfläche (4a,5a,6a) und an seiner freien Stirnseite eine Aussparung (14) zum bündigen Einsatz der Winkelbleche (3) hat und in dieser Aussparung (14) jeweils eine Schraubaufnahme für die Befestigungsschraube vorgesehen ist.

8. Pultsteuertafel nach einem der Ansprüche 1 bis 7, dadurch gekennzeichnet, daß jeder Y-Schenkel (4,5,6) an seiner Innenseite einen vom Winkelscheitelpunkt (17) aus diagonal nach außen zu der eckseitigen Aussparung (14) verlaufenden Absatz (18) aufweist, der jeweils eine Anlage- und Befestigungsfläche (8a) für die Befestigung einer Dichtung (19) und eines Bildschirm-Blendrahmens (20) an einem Y-Schenkel (4 oder 5 oder 6) und für die Befestigung einer Frontplatte (21) einer Tastatur (22) an dem sich an dem Bildschirm-Blendrahmen (20) anschließenden Y-Schenkel (5 oder 6 oder 4) bildet.

9. Pultsteuertafel nach einem der Ansprüche 1 bis 8, dadurch gekennzeichnet, daß in den Absätzen (18) der drei Y-Schenkel (4,5,6) von der schrägen Befestigungsfläche (18a) aus in Seitenteilebene in jeden Absatz (18) hinein- bzw. durch den Absatz hindurchgeführte Schraubaufnahmen (23) für die Befestigung des Gehäuses (7), des Bildschirm-Blendrahmens (20) sowie der Frontplatte (21) an den Befestigungsflächen (4a,6b/6a, 5b/ 5a, 4b sowie 18 a) vorgesehen sind.

10. Pultsteuertafel nach einem der Ansprüche 1 bis 9, dadurch gekennzeichnet, daß das Verbindungsprofil (2) in seinen Dreieckkanten in Profillängsrichtung verlaufende, winkelförmige Abstufungen (28) aufweist, in denen Schraubaufnahmen (29) für die Befestigung des Bildschirm-Blendrahmens (20) und der Frontplatte (21) ausgespart sind.

11. Pultsteuertafel nach einem der Ansprüche 1 bis 10, dadurch gekennzeichnet, daß jeweils unter den beiden benachbarten, untenliegenden Anlage- und Befestigungsflächen (6a, 5a / 4a,b und 5a,4b) ein Bodenblech (24) durch Schrauben befestigt ist.

12. Pultsteuertafel nach einem der Ansprüche 1 bis 11, dadurch gekennzeichnet, daß unter dem Verbindungsprofil (2) ein Tragarm mit Drehkupplung für die aufgehängte Anordnung der Pultsteuertafel durch Schrauben befestigt ist.

13. Pultsteuertafel nach einem der Ansprüche 1 bis 12, dadurch gekennzeichnet, daß an den Außenseiten der beiden Seitenteile (1) jeweils ein Handgriff (26) in Y-Form angeordnet ist, dessen drei einen ovalen Querschnitt besitzenden Y-Schenkel an ihrem freien Ende jeweils einen Befestigungskopf (27) aufweisen, mit denen der Handgriff (26) durch Schrauben in den Längenendbereichen der drei Y-Schenkel (4,5,6) festgelegt ist.

14. Pultsteuertafel nach einem der Ansprüche 1 bis 13, dadurch gekennzeichnet, daß die beiden Seitenteile (1), die Querverbindungen (2,3), die Bodenbleche (24) und die Handgriffe (26) aus Aluminium bestehen.

15. Pultsteuertafel nach einem der Ansprüche 1 bis 14, dadurch gekennzeichnet, daß als Anlage- und Befestigungsflächen für das Gehäuse (7) jeweils eine Schenkelfläche (4a, 5a, 6a) und eine Anlagefläche (18a) des benachbarten Y-Schenkels (6,5,4) vorgesehen ist, so daß das Gehäuse (7) an einem Y-Schenkel (4,5,6) außenseitig anliegt und zwischen den Seitenteilen (1) des benachbarten Y-Schenkels (6,5,4) liegt.

## Claims

1. Console control panel, in particular for machine controllers, having two side parts held spaced apart from one another by means of transverse stays, characterised in that the two side parts (1) are each a basic "Y"-shape with three "Y'-legs (4, 5, 6) of different lengths, of which adjoining "Y"-legs (4 and 5 / 5 and 6 / 6 and 4) respectively constitute two contact and attachment surfaces (4a,6b/6a,5b/5a,4b) for fixing, as required, three housings (7) of different sizes accommodating a control unit or control panel.

2. Console control panel according to claim 1, characterized in that the three "Y"-legs (4, 5, 6) of different lengths of each side part (1) extend in a common plane and at identical angles to one another, viz. an angle α of 120°.

3. Console control panel according to claim 1 or 2, characterised in that on its open front and base sides corresponding to the adjoining "Y"-legs (4,5 or 5/6) or 6/4) in the angular position, the housing (7) is equipped with inwardly folded contact edges (8), by which the housing (7) rests against the two contact and attachment surfaces (4a,6b / or 6a, 5b or 6a, 4b) corresponding to the housing size and is secured by screws.

4. Console control panel according to any of claims 1 to 3, characterised in that the housing (7) consists of thin metal sheet reinforced with beads (11) incorporated in at least individual walls, preferably in the side walls.

5. Console control panel according to any of claims 1 to 4, characterised in that to form the transverse stay in the node region of the "Y"'legs (4, 5, 6), a hollow stay profile (2) of triangular cross-section is fixed with screws between the two side parts (1), the screws gripping through holes (13) in the side parts (1) and engaging in screw locators (12) incorporated in the stay profile (2).

6. Console control panel according to any of claims 1 to 5, characterised in that as tranverse stays there are provided angle plates (3) which extend beyond the free longitudinal extremity of each "Y"-leg (4,5,6), flush with the outer faces of the legs, and are held on the side parts (1) by screws.

7. Console control panel according to any of claims 1 to 6, characterised in that each "Y"-leg (4,5,6) has a recess (14) in the corner region of its contact and attachment surface (4a,5a,6a) and on its free front side, for flush insertion of the angle plates (3), and a respective screw locator is provided in said recess (14) for the fixing screw.

8. Console control panel according to any of claims 1 to 7, characterised in that on its inside face each "Y"-leg (4,5,6) has a shoulder (18) which runs diagonally outwards from the vertex of the angle (17) to the recess (14) at the corner, said shoulder (18) in each case constituting a contact and attachment suface (8a) for securing a seal (19) and a screen masking frame (20) to one "Y"-leg (4 or 5 or 6) and for securing a front plate (21) of a keyboard (22) to the "Y"-leg (5 or 6 or 4) contiguous with the screen masking frame (20).

9. Console control panel according to any of claims 1 to 8, characterised in that in the shoulders (18) of the three "Y"-legs (4,5,6) there are provided screw locators (23) for securing the housing (7), the screen masking frame (20) and the front plate (21) to the attachment surfaces (4a,6b/ 6a,5b/ 5a,4b and 18a), said locators passing from the angled attachment surface (18a) in the plane of the side parts into each shoulder (18) or through the shoulder.

10. Console control panel according to any of claims 1 to 9, characterised in that the stay profile (2) has angular steps (28) running lengthways along the profile in the triangular edges thereof, in which steps (28) are recessed screw locators (29) for securing the screen masking frame (20) and the front plate (21).

11. Console control panel according to any of claims 1 to 10, characterised in that a floorplate (24) is secured by screws under each of the two adjoining, lower contact and attachment surfaces (6a, 5a / 4a,b and 5a,4b).

12. Console control panel according to any of claims 1 to 11, characterised in that a support arm with rotating joint is secured by screws beneath the stay profile for suspended arrangement of the console control panel.

13. Console control panel according to any of claims 1 to 12, characterised in that on the outer faces of the two side parts (1) is disposed a respective "Y"-shaped handle (26), the three "Y"-legs of which, oval in cross-section, each have at their free end an attachment head (27), with which the handle (26) is fixed by screws in the longitudinal end regions of the three "Y"-legs (4,5,6).

14. Console control panel according to any of claims 1 to 13, characterised in that the two side parts (1), the transverse stays (2,3), the floorplates (24) and the handles (26) are of aluminium.

15. Console control panel according to any of claims 1 to 14, characterised in that provided as the contact and attachment surfaces for the housing (7) are a respective leg surface (4a, 5a, 6a) and a contact surface (18a) of the adjoining "Y"-leg (6,5,4), with the result that the housing (7) rests externally against one "Y"-leg (4,5,6) and is situated between the side parts (1) of the adjoining "Y"-leg (6,5,4).

## Revendications

1. Pupitre de commande, en particulier pour des commandes de machines, avec deux pièces latérales, maintenues à intervalle l'une de l'autre par des traverses,
caractérisé par le fait
que les deux pièces latérales (1) présentent chacune une forme de base en Y, dont les branches (4, 5, 6) sont de longueur différente, les branches voisines (4 et 5 / 5 et 6 / 6 et 4) formant respectivement deux surfaces d'appui et de fixation (4a, 6b / 6a, 5b / 5a, 4b) pour trois tailles différentes de carters (7) accueillant un appareil ou un tableau de commande.

2. Pupitre de commande selon revendication 1,
caractérisé par le fait
que les trois branches de l'Y de différente longueur 4, 5, 6) de chacune des pièces latérales (1) s'étendent sur un plan commun et forment un même angle, à savoir : un angle α de 120 °, les unes par rapport aux autres.

3. Pupitre de commande selon revendication 1 ou 2,
caractérisé par le fait
que, sur ses côtés ouverts, en l'occurence: front et fond, dont la position angulaire correspond à la position angulaire correspondant à celle des branches d'Y voisines (4, 5 ou 5/6 ou 6/4), le carter (7) est équipé de bords d'appui (8) pliés vers l'intérieur, à l'aide desquels le carter (7) prend appui et est vissé sur les deux surfaces d'appui et de fixation (4a, 6b ou 6a, 5b ou 6a, 4b) correspondant à sa taille.

4. Pupitre de commande selon l'une des revendications 1 à 3,
caractérisé par le fait
que le carter (7) est en tôle fine, certaines parois au moins, de préférence les parois latérales, étant renforcées par des moulures (11).

5. Pupitre de commande selon l'une des revendications 1 à 4,
caractérisé par le fait
que la traverse consiste en un profilé de raccordement creux (2), de section transversale triangulaire, vissé entre les deux pièces latérales (1), dans la zone de jonction des branches de l'Y (4, 5, 6)

6. Pupitre de commande selon l'une des revendications 1 à 5,
caractérisé par le fait
que la traverse consiste en tôles en équerre (3), qui empiètent sur l'extrémité longitudinale, libre de chaque branche de l'Y (4, 5, 6), à fleur des surfaces externes des branches et sont fixées aux pièces latérales (1) par des vis.

7. Pupitre de commande selon l'une des revendications 1 à 6,
caractérisé par le fait
que chaque branche de l'Y (4, 5, 6) présente, dans la zone d'angle de sa surface d'appui et de fixation (4a, 5a, 6a) et à sa partie frontale, une encoche pour l'insertion à fleur des pièces en équerre (3), un récepteur de vis étant prévu dans chaque encoche (14) pour la vis de fixation.

8. Pupitre de commande selon l'une des revendications 1 à 7,
caractérisé par le fait
que chaque branche de l'Y (4, 5, 6) présente, sur sa face interne, un gradin (18) qui s'étend, obliquement, du sommet de l'angle (17) vers l'encoche angulaire (14) et forme une surface d'appui et de fixation (8a) pour le montage d'un joint d'étanchéité (19) et d'un cadre (20) d'écran de visualisation sur une branche de l'Y (4 ou 5 ou 6) et pour la fixation d'une plaque frontale (21) de clavier (22) sur la branche de l'Y (5 ou 6 ou 4) faisant suite au cadre (20) de l'écran de visualisation.

9. Pupitre de commande selon l'une des revendications 1 à 8,
caractérisé par le fait
que, pour la fixation du carter (7), du cadre (20) de l'écran de visualisation, ainsi que de la plaque frontale (21) aux surfaces de fixation (4a, 6b / 6a, 5b / 5a, 4b ainsi que 18), des récepteurs de vis (23) sont prévus dans les gradins (18) des trois branches d'Y (4, 5, 6), lesquels, partant de la surface de fixation oblique (18a), au niveau de la pièce latérale, pénètrent resp. traversent le gradin (18).

10. Pupitre de commande selon l'une des revendications 1 à 9,
caractérisé par le fait
que le profilé de raccordement (2) présentent des marches angulaires (28) qui s'étendent, dans ses bords triangulaires, dans le sens longitudinal du profilé, et dans lesquelles des récepteurs de vis (29) sont pratiqués pour la fixation du cadre (20) de l'écran de visualisation et de la plaque frontale (21).

11. Pupitre de commande selon l'une des revendications 1 à 10,
caractérisé par le fait
que sous chacune des deux surfaces inférieures d'appui et de fixation voisines (6a, 5a / 4a,b et 5a/4b), une tôle de fond (24) est fixée à l'aide de vis.

12. Pupitre de commande selon l'une des revendications 1 à 11,
caractérisé par le fait
que, sous le profilé de raccordement (2), un support avec joint tournant est vissé pour permettre de suspendre le pupitre de commande.

13. Pupitre de commande selon l'une des revendications 1 à 12,
caractérisé par le fait
que, sur les faces externes de chacune des deux pièces latérales (1), une poignée (26) en Y est prévue, dont chacune des trois branches, de section transversale ovale, est munie, à son extrémité libre, d'une tête de fixation (27), à l'aide de laquelle la poignée (26) est vissée dans les zones d'extrémité longitudinale des trois branches de l'Y (4, 5, 6).

14. Pupitre de commande selon l'une des revendications 1 à 13,
caractérisé par le fait
que les deux pièces latérales (1), les traverses (2, 3), les tôles de fond (24) et les poignées (26) sont en aluminium.

15. Pupitre de commande selon l'une des revendications 1 à 14,
caractérisé par le fait
qu'une surface de branche (4a, 5a, 6a) et une surface d'appui (18a) de la branche d'Y voisine (6, 5, 4) sont respectivement prévues comme surfaces d'appui et de fixation du carter (7), de sorte que celui-ci s'appuie, côté extérieur, sur une branche d'Y (4, 5, 6) et se trouve entre les pièces latérales (1) de la branche d'Y voisine (6, 5, 4).
